# EUROPÄISCHE PATENTSCHRIFT

(11) **EP 1 825 118 B1**
(45) Veröffentlichungstag und Bekanntmachung des Hinweises auf die Patenterteilung: **07.03.2012**
(21) Anmeldenummer: 05821990.8
(22) Anmeldetag: 08.12.2005
(51) Int. Cl.: F02M 25/07, F02D 41/00, F02D 21/08

(54) **ABGASRÜCKFÜHRSTEUERUNG MITTELS LASTSIGNAL AN EINER REIHENEINSPRITZPUMPE**
CONTROLLING EXHAUST GAS RECIRCULATION BY MEANS OF A LOAD SIGNAL ON AN IN-LINE INJECTION PUMP
DISPOSITIF DE COMMANDE DE RETOUR DE GAZ D'ECHAPPEMENT FONCTIONNANT AU MOYEN D'UN SIGNAL DE CHARGE FOURNI A UNE POMPE D'INJECTION SERIE

(30) Priorität: 17.12.2004 DE 102004060841
(43) Veröffentlichungstag der Anmeldung: 29.08.2007
(73) Patentinhaber: DEUTZ Aktiengesellschaft, 51149 Köln (DE)
(72) Erfinder: FÖRST, Heinz-Georg, 50796 Köln (DE); LUTTER, Karl, 51491 Overath (DE); HAAS, Eckhard, 51149 Köln (DE)
(86) Internationale Anmeldenummer: PCT/EP2005/013147
(87) Internationale Veröffentlichungsnummer: WO 2006/066737

(56) Entgegenhaltungen:
- EP-A- 0 579 967
- US-A- 4 020 809
- US-A- 4 157 081
- US-A- 4 295 455

## Beschreibung

Die Erfindung betrifft eine Brennkraftmaschine mit einer Ansaugleitung zur Zuführung der Verbrennungsluft zu den einzelnen Brennräumen, mit einer Abgasleitung zur Abführung der Abgase aus den Brennräumen, mit einer die Ansaugleitung und die Abgasleitung verbindenden Abgasrückführleitung und mit einer mechanischen Einspritzpumpe, wobei der Abgasrückführleitung ein elektrisch gesteuertes AGR-Ventil (Abgasrückführ-Ventil) zur Steuerung des wirksamen Querschnittes der Abgasrückführleitung angeordnet ist.

Moderne Abgasrückführsysteme (AGR) werden in der Regel über eine elektronische Einspritzvorrichtung gesteuert, wobei hierfür ein Steuergerät (ECU) an der Brennkraftmaschine vorhanden ist. Die AGR-Menge wird über ein Kennfeld gesteuert, welches den Lastzuständen der Brennkraftmaschine entspricht.

Bei den heutigen "mechanischen" Brennkraftmaschinen mit einer Reiheneinspritzpumpe fehlt gänzlich eine derartige Elektronik oder ECU. Das einzige Lastsignal ist bei diesen "mechanischen" Brennkraftmaschinen die Position der Regelstange an der Einspritzpumpe.

Aus der US 4,295,455 A ist eine Brennkraftmaschine mit Abgasrückführung bekannt, bei der die Steuerklappe zur Einstellung der Abgasrückführrate elektrisch betätigt ist. Zur Einleitung eines Schaltvorgangs ist ein mechanischer Schalter vorgesehen, der mit einem Reglerhebel des Reglers der Einspritzpumpe zusammenwirkt. Dieser Reglerhebel wirkt über Reglerfedern und weitere Einfluss nehmende Aktoren mit der eigentlichen Einspritzpumpe zusammen. Eine sehr ähnliche Einrichtung ist aus der US 4,020,809 A bekannt.

Der Erfindung liegt die Aufgabe zugrunde, bei einer Brennkraftmaschine nach dem Oberbegriff des Anspruchs 1 mit einfachen Mitteln eine gesteuerte Abgasrückführung zu schaffen.

Diese Aufgabe wird dadurch gelöst, dass eine elektrische Abgreifvorrichtung die Stellung einer die Einspritzpumpe steuernden Regelstange ermittelt und danach das AGR-Ventil steuert und dass die elektrische Abgreifvorrichtung ein berührungsloser Schalter ist, der bei vorbestimmten Positionen der Regelstange ein Signal an das AGR-Ventil zum Öffnen oder Schließen abgibt.

Ebenso wird diese Aufgabe dadurch gelöst, dass eine elektrische Abgreifvorrichtung die Stellung einer die Einspritzpumpe steuernden Regelstange ermittelt und danach das AGR-Ventil steuert und dass die elektrische Abgreifvorrichtung ein berührungsloser Weggeber ist, der die Stellung der Regelstange kontinuierlich ermittelt und danach das AGR-Ventil kontinuierlich steuert.

Dadurch, dass in der Abgasrückführleitung ein elektrisch gesteuertes AGR-Ventil (Abgasrückführ-Ventil) zur Steuerung des wirksamen Querschnittes der Abgasrückführleitung angeordnet ist und dass eine elektrische Abgreifvorrichtung die Stellung der Regelstange ermittelt und danach das AGR-Ventil steuert, ist bei "mechanischen" Brennkraftmaschinen mit einfachen Mitteln eine gesteuerte Abgasrückführung geschaffen.

Die Brennkraftmaschine ist bevorzugt eine selbstzündende Brennkraftmaschine bzw. ein Dieselmotor.

Die Einspritzpumpe ist vorteilhaft eine Reiheneinspritzpumpe.

In weiterer Ausgestaltung der Erfindung wird ein Abgasrückführsystem bereitgestellt, das von der im Betrieb heißen Abgassammelleitung unbeeinflusst bleibt.

Dies wird dadurch erreicht, dass das Abgasrückführsystem auf der der Ansaugleitung und der Abgasleitung gegenüberliegenden Zylinderkopfseite angeordnet ist. Diese Anordnung fern von der gegenüber anderen Bauteilen im Betrieb wesentlich heißeren Abgasleitung hat eine direkte Absenkung der Temperatur der zurückgeführten Abgasmenge zur Folge, ohne dass weitere spezielle Kühlmaßnahmen vorgesehen sind. Es handelt sich bei dem Zylinderkopf bevorzugt um einen Einzelzylinderkopf, der zusammen mit dem zugehörigen Zylinder auf dem Kurbelgehäuse verschraubt ist. Selbstverständlich ist die Erfindung auch bei einem Blockzylinderkopf und mit einstückig mit dem Kurbelgehäuse hergestellten Zylindern anwendbar.

In Weiterbildung der Erfindung sind in den Zylinderkopf jeweils mit dem Frischgaskanal und dem Abgaskanal verbundene auf der Zylinderkopfseite mündende Kanäle eingelassen (der Frischgaskanal und der Abgaskanal verbinden Gaswechselventile mit der Ansaugleitung beziehungsweise mit der Abgasleitung). Die Kanäle, deren Querschnitt gegenüber den zuvor genannten Gaskanälen erheblich kleiner dimensioniert sein kann, können an geeigneter Stelle in dem Zylinderkopf angeordnet sein und bei der Herstellung des Zylinderkopfs mit eingegossen werden oder nachträglich durch eine mechanische Bearbeitung eingebracht werden. Bevorzugt werden diese Kanäle nachträglich durch eine mechanische Bearbeitung in den Zylinderkopf eingearbeitet, so dass der Zylinderkopfrohling für eine Brennkraftmaschinenversion mit oder ohne Abgasrückführung gleich ausgebildet sein kann. An diesen auf der Zylinderkopfseite mündenden Kanälen ist dann ein Abgasrückführsystem, bestehend aus einer Abgasrückführsammelleitung, einem AGR-Ventil und einer Abgasrückführverteilleitung, einfach befestigbar. Dabei liegt ein weiterer Vorteil darin, dass die Abgasleitung gegenüber einer Ausführung ohne Abgasrückführung unverändert bleiben kann. Dies ist insbesondere dann besonders vorteilhaft, wenn für unterschiedliche Einsatzzwecke und Kundenwünsche verschiedenartige Abgasleitungen mit beispielsweise unterschiedlichen Anschlüssen zur Weiterführung der Abgase bereitgestellt werden. Weiterhin wird das für einen Einbau maßgebliche Bauvolumen der Brennkraftmaschine durch diese Ausgestaltung und Anordnung des Abgasrückführsystems nicht beeinflusst, so dass eine Unterscheidung einer Brennkraftmaschine mit Abgasrückführung und einer Brennkraftmaschine ohne Abgasrückführung unterbleiben kann. Dies ist besonders vorteilhaft hinsichtlich der Austauschbarkeit entsprechender beispielsweise in Baumaschinen oder landwirtschaftlichen Maschinen eingebauten Brennkraftmaschinen.

In Weiterbildung der Erfindung weist die Brennkraftmaschine ein Kühlluftgebläse auf und das Abgasrückführsystem ist direkt in dem von dem Kühlluftgebläse geförderten Kühlluftstrom angeordnet. Diese Anordnung ermöglicht zunächst einmal eine wirkungsvolle Kühlung des zurückgeführten Abgases ohne irgendwelchen weiteren Aufwand. Zum Weiteren kann das Abgasrückführsystem in einen Kühlluftleitkanal, der von einem Kühlluftleitgehäuse gebildet ist und entlang der Zylinderkopfseite angeordnet ist, integriert werden und stellt somit in jedem Fall keine über eine gegebene seitliche Kontur hinausragende Komponente dar, so dass sichergestellt ist, dass eine entsprechend mit einem Abgasrückführsystem ausgestattete Brennkraftmaschine zu der gleichen Brennkraftmaschine ohne ein Abgasrückführsystem ohne Weiteres austauschbar ist. Es handelt sich bei einer derartigen Brennkraftmaschine bevorzugt um eine luftgekühlte Brennkraftmaschine, es kann sich aber auch um eine Brennkraftmaschine mit einem kombinierten Kühlsystem handeln, wobei das Gebläse das Kühlmedium, beispielsweise Öl und/oder Wasser, kühlt und gegebenenfalls zusätzlich zur Luftkühlung des beispielsweise Zylinderkopfs herangezogen wird.

In weiterer Ausgestaltung ist das AGR-Ventil benachbart zu dem Kühlluftgebläse angeordnet, so dass dieses thermisch empfindliche Bauteil besonders wirkungsvoll und intensiv gekühlt wird. Schließlich kann zur Erhöhung der Kühlleistung das Abgasrückführsystem insbesondere eine Außenverrippung aufweisen, wobei diese Außenverrippung selbstverständlich strömungstechnisch optimiert in Richtung der Kühlluftströmung ausgerichtet sein kann.

Wie zuvor ausgeführt wurde, wird die Abgasrückführung über eine elektrische Steuerung, die ein Regelstangenwegsignal auswertet, ein- und ausgeschaltet. Dabei kommt bevorzugt ein Hallsensor zum Einsatz, der über einen oder mehrere in die Regelstange integrierte Magnete geschaltet wird. Ein solcher Hallsensor ist ein sehr zuverlässiger elektrischer Schalter, mit dem die Abgasrückführung ein- und ausgeschaltet werden kann. Dabei wird in weiterer Ausgestaltung der Erfindung die Abgasrückführung oberhalb einer Einspritzmenge, die einer Last größer als drei Viertel der Volllast entspricht, ausgeschaltet. In diesem Volllastbereich wird kein Abgas zurückgeführt, da in dem Volllastbereich eine Abgasrückführung zu einer Verschlechterung der Abgasemissionen führen würde. Hierzu sind in einer bevorzugten Ausführungsform in den Bereich der Regelstange, der diesen Einspritzmengenbereich abdeckt, mehrere kleine Magnete nebeneinander liegend in Bohrungen eingesetzt. Diese Magnete schalten den außen an das Pumpengehäuse der Einspritzvorrichtung angebrachten Hallsensor. Dieses Verfahren bzw. diese Ausgestaltung ist extrem zuverlässig, da es sich bei dieser elektrischen Steuerung ausdrücklich nicht um elektronische Steuereinrichtung handelt. Weiterhin kann die Abgasrückführung bei einer Drehzahl unterhalb einer erhöhten Leerlaufdrehzahl ausgeschaltet werden. Diese Schaltfunktion ist dann vorgesehen, wenn mit geringer werdenden Drehzahlen, beispielsweise unterhalb einer Grenzdrehzahl von 1500 U/min die Gefahr besteht, dass bei einer Abgasrückführung durch die Auslegung des Einspritzsystems Rauchprobleme auftreten können. Zu diesem Zweck ist ein induktiver Drehzahlschalter vorgesehen, der ebenfalls an dem Pumpengehäuse angebaut wird und unterhalb insbesondere einer Drehzahl von 1450 U/min das gewünschte Schaltsignal abgibt. Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

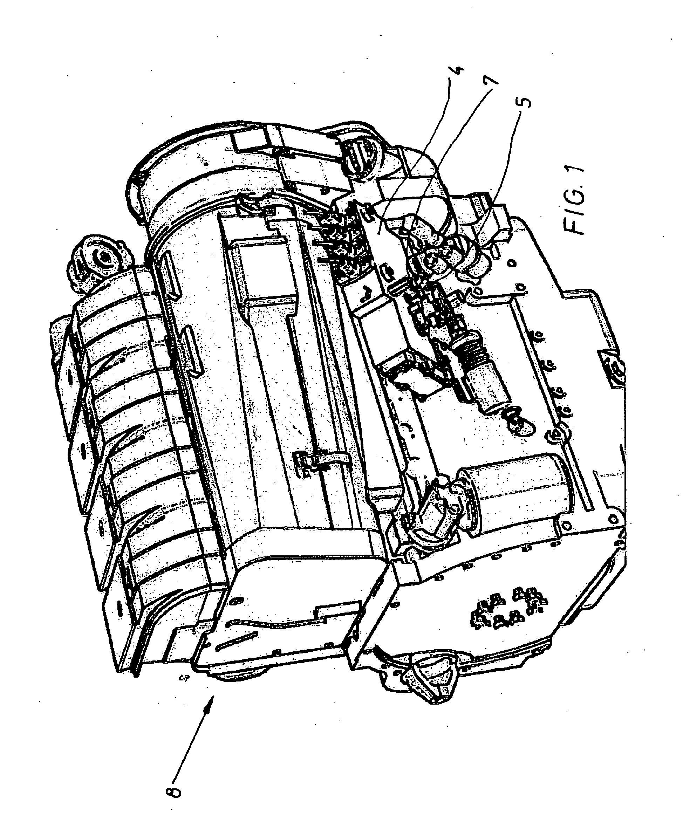

- Fig. 1: eine Seitenansicht einer Brennkraftmaschine, auf der die Einspritzpumpe angeordnet ist,
- Fig. 2: die gegenüberliegende Seite der Brennkraftmaschine zu Fig. 1 mit der Ansaugleitung, Abgasleitung und der Abgasrückführleitung,
- Fig. 3: eine perspektivische Ansicht einer Brennkraftmaschine mit geöffnetem Kühlluftleitgehäuse mit einer Variante des Abgasrückführsystems und
- Fig. 4: einen Querschnitt durch einen Zylinderkopf gemäß Fig. 3 im Bereich eines Kanals.

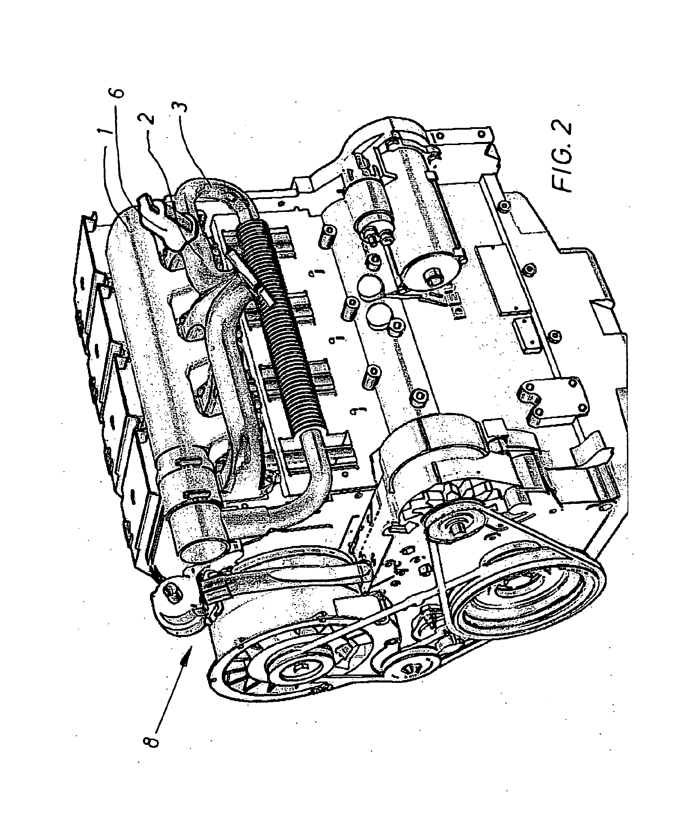

Über eine Ansaugleitung 1 (Fig. 2) gelangt die zur Verbrennung des eingespritzten Brennstoffs erforderliche Verbrennungsluft in die Brennräume der selbstzündenden Brennkraftmaschine 8. Nach dem Arbeitstakt werden die Abgase über eine Abgasleitung 2 abgeführt. Die Abgasleitung 2 ist über eine Abgasrückführleitung 3 mit der Ansaugleitung 1, in die auch von beispielsweise einem Kompressor eines Turboladers Verbrennungsluft gefördert werden kann, verbunden. In der Abgasrückführleitung 3 ist ein elektrisch gesteuertes AGR-Ventil (Abgasrückführ-Ventil) 6 eingebaut, mit dem der wirksame Querschnitt der Abgasrückführleitung, d. h. die Menge des rückgeführten Abgases, gesteuert wird.

Zur Steuerung des AGR-Ventils 6 ist eine elektrische Abgreifvorrichtung 7 an der Einspritzpumpe 4, hier eine Reiheneinspritzpumpe, angeordnet, welche die Stellung der Regelstange 5 ermittelt und danach das AGR-Ventil 6 elektrisch steuert.

Die Abgreifvorrichtung kann bevorzugt zwei Ausführungsformen aufweisen.

In einer ersten Ausführungsform ist die elektrische Abgreifvorrichtung 7 ein berührungsloser Schalter, der bei vorbestimmten Positionen der Regelstange 5 ein Signal an das AGR-Ventil 6 zum Öffnen oder Schließen abgibt.

In einer zweiten Ausführungsform ist die elektrische Abgreifvorrichtung 7 ein berührungsloser Weggeber, der die Stellung der Regelstange 5 kontinuierlich ermittelt und danach das AGR-Ventil 6 kontinuierlich steuert.

Mit diesen Merkmalen ist eine selbstzündende Brennkraftmaschine 8 mit einer Reiheneinspritzpumpe bereitgestellt, die ohne zusätzliche Elektronik oder ECU eine Steuerung der zurückgeführten Abgasmenge ermöglicht.

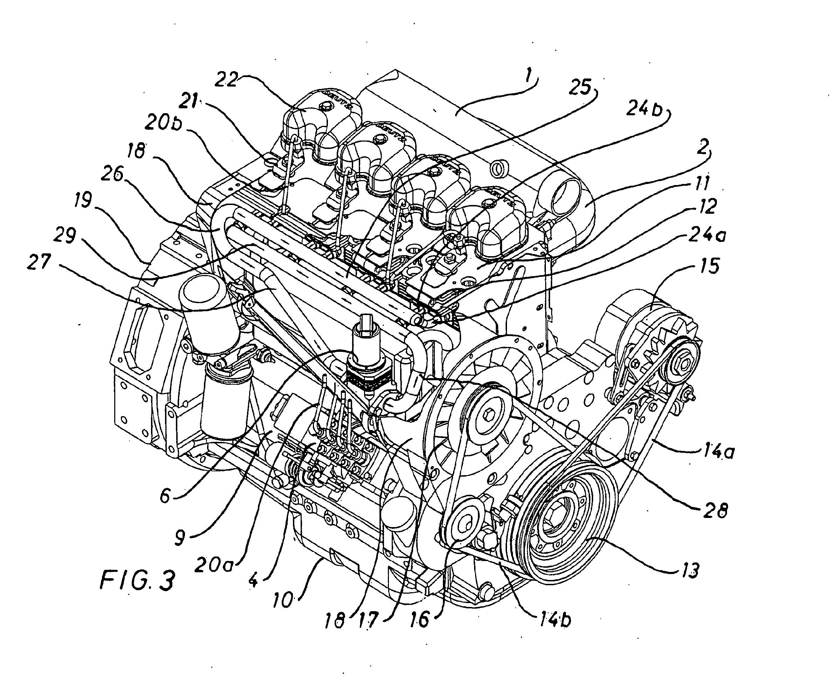

Die Brennkraftmaschine gesäß Fig. 3 weist wie die zuvor beschriebene Brennkraftmaschine ein Kurbelgehäuse 9 auf, das bodenseits von einer Ölwanne 10 verschlossen ist. Auf das Kurbelgehäuse 9 sind gegenüberliegend zu der Ölwanne 10 Zylinderrohre aufgesetzt, die wiederum von Zylinderköpfen 11 abgedeckt sind. Bei dem Ausführungsbeispiel handelt es sich um eine 4-zylindrige Brennkraftmaschine, so dass insgesamt vier Zylinderrohre und vier Zylinderköpfe 11 verbaut sind. Darüber hinaus ist die Brennkraftmaschine luftgekühlt und dementsprechend sind die Zylinderrohre und die Zylinderköpfe 11 mit Kühlrippen 12 versehen.

Stirnseitig der Brennkraftmaschine ist an einer in dem Kurbelgehäuse 9 gelagerten Kurbelwelle ein Zweifachriemenrad 13 befestigt, das über einen ersten Keilriemen 14a mit einem Generator 15 und über einen zweiten Keilriemen 14b unter Einschaltung einer Spannrolle 16 mit einem Kühlluftgebläse 17 antriebsverbunden ist.

Das Kühlluftgebläse 17 ist seitlich oberhalb des Kurbelgehäuses 9 im Wesentlichen im Bereich neben den Zylinderrohren und den Zylinderköpfen 11 angeordnet und fördert aus der Umgebung angesaugte Kühlluft in ein Kühlluftleitgehäuse 18, das sich von dem Kühlluftgebläse 17 bis zu einem gegenüberliegenden schwungradseitigen Ende 19 der Brennkraftmaschine erstreckt und die geförderte Kühlluft quer durch die Brennkraftmaschine entlang den Zylinderrohren und den Zylinderköpfen 11 verteilt. In der Fig. 3 ist ein Wartungsdeckel des Kühlluftleitgehäuses 18 abgenommen und im Bereich des Kühlluftgebläses 17 das Kühlluftleitgehäuse 18 teilweise aufgeschnitten dargestellt, so dass ein Einblick in das Innere des Kühlluftleitgehäuses 18 gegeben ist.

Unterhalb des Kühlluftleitgehäuses 18 ist eine als Reiheneinspritzpumpe ausgebildete Einspritzpumpe 4 angebaut, die über unterbrochen dargestellte Einspritzleitungen 20a, 20b mit in den Zylinderköpfen 11 eingesetzten Kraftstoffeinspritzventilen verbunden ist. Jedes Kraftstoffeinspritzventil ist mittels einer Spannpratze 21 an dem Zylinderkopf befestigt und schließt seitlich an einen Ventildeckel 22 an, der sich bis an eine gegenüberliegende Zylinderkopflängsseite zu der kühlluftleitgehäuseseitigen Zylinderkopfseite erstreckt. Auf dieser Zylinderkopflängsseite sind die Ansaugleitung 1 und die Abgasleitung 2 angeordnet. Im Bereich oberhalb, zwischen und unterhalb der Ansaugleitung 1 und der Abgasleitung 2 strömt ein wesentlicher Teil der von dem Kühlluftgebläse 17 geförderten Kühlluft wieder in die Umgebung.

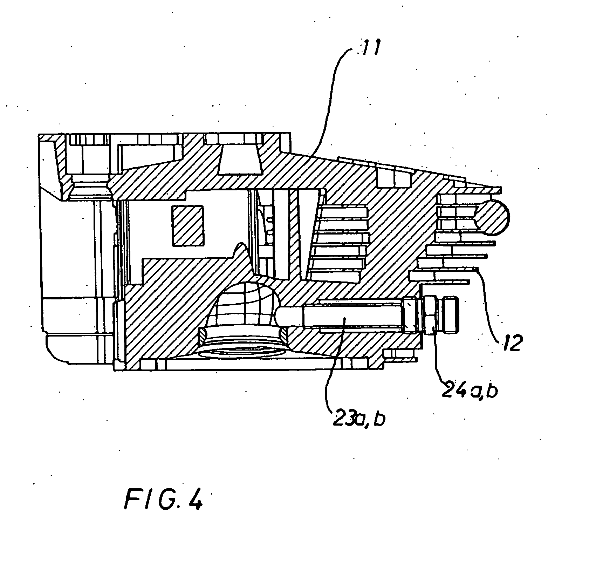

Die in den Zylindern zwischen den einzelnen Zylinderköpfen 11 und den jeweils in den Zylindern auf und ab bewegbaren Kolben liegenden Brennräume sind über Gaswechselventile und Gaswechselkanäle jeweils mit der Ansaugleitung 1 und der Abgasleitung 2 strömungsverbunden. Auf der gegenüberliegenden Zylinderkopfseite sind in die Zylinderköpfe 11 Kanäle 23a, 23b (Fig. 4) eingearbeitet, von denen ein Kanal 23a mit einem Gaswechselauslasskanal und der Kanal 23b mit einem Gaswechseleinlasskanal nebeneinanderliegend verbunden sind. Diese Kanäle 23a, 23b sind in einem unteren Bereich des Zylinderkopfs 11 auf die kühlluftgebläseseitige Zylinderkopfseite geführt und mit passenden Verbindungseinrichtungen 24a, 24b versehen.

Das Abgasrückführsystem ist bei diesem Ausführungsbeispiel in dem Kühlluftleitgehäuse 18 angeordnet und verbindet die Kanäle 23a steuer- bzw. regelbar mit den Kanälen 23b. Dazu sind die Kanäle 23a mit einer gemeinsamen Sammelleitung 25 verschaltet, die im Bereich des schwungradseitigen Endes 19 über einen Bogen 26 in eine Zufuhrleitung 27 zu dem Abgasrückführsteuerventil 6 weitergeführt ist. Auf der gegenüberliegenden Seite zu der Zufuhrleitung 27 ist an das Abgasrückführsteuerventil 6 ein Umlenkbogen 28 angeschlossen, der sich in eine Verteilleitung 29 fortsetzt, die angenähert parallel unterhalb der Sammelleitung 25 angeordnet ist und die wiederum mit den Kanälen 23b der einzelnen Zylinderköpfe 11 verbunden ist.

Das gesamte Abgasrückführsystem ist innerhalb des Kühlluftleitgehäuses 18 angeordnet und ist somit bei geschlossenem Kühlluftleitgehäuse von außen einerseits nicht sichtbar und andererseits beeinflusst es die äußeren Abmessungen der Brennkraftmaschine nicht. Weiterhin erfolgt durch die Anordnung der Abgasrückführeinrichtung komplett innerhalb des Kühlluftleitgehäuses 18 eine wirkungsvolle Kühlung der Bauteile des Abgasrückführsystems. Die einzelnen Leitungen und Bögen sowie das Abgasrückführsteuerventilgehäuse können zur Erhöhung des Wärmeübertrages auch noch zusätzlich mit innenseitigen und/oder außenseitigen Kühlrippen versehen sein.

Die Einspritzpumpe 4 ist auch in diesem Ausführungsbeispiel mit einem Regler ausgestattet, der als mechanischer Regler ausgebildet ist. Um das Abgasrückführsteuerventil 6 ohne komplizierte und aufwendige elektronische Steuereinrichtung betätigen zu können, wird auch hier die Stellung der in der Reiheneinspritzpumpe 4 vorhandenen Regelstange kontaktlos abgegriffen und diese Stellung zur Steuerung des Abgasrückführsteuerventils 6 über eine mechanische oder elektrische Übertragungseinrichtung herangezogen.

Dies erfolgt über eine elektrische Steuerung, die ein Regelstangenwegsignal auswertet. Dabei kommt bevorzugt ein Hallsensor zum Einsatz, der über einen oder mehrere in die Regelstange integrierte Magnete geschaltet wird. Ein solcher Hallsensor ist ein sehr zuverlässiger elektrischer Schalter, mit dem die Abgasrückführung ein- und ausgeschaltet werden kann. Dabei wird in weiterer Ausgestaltung der Erfindung die Abgasrückführung oberhalb einer Einspritzmenge, die einer Last größer als drei Viertel der Volllast entspricht, ausgeschaltet. In diesem Volllastbereich wird kein Abgas zurückgeführt, da in dem Volllastbereich eine Abgasrückführung zu einer Verschlechterung der Abgasemissionen führen würde. Hierzu sind in einer bevorzugten Ausführungsform in den Bereich der Regelstange, der diesen Einspritzmengenbereich abdeckt, mehrere kleine Magnete nebeneinander liegend in Bohrungen eingesetzt. Diese Magnete schalten den außen an das Pumpengehäuse der Einspritzvorrichtung angebrachten Hallsensor. Dieses Verfahren bzw. diese Ausgestaltung ist extrem zuverlässig, da es sich bei dieser elektrischen Steuerung ausdrücklich nicht um eine elektronische Steuereinrichtung handelt.

In weiterer Ausgestaltung der Erfindung wird die Abgasrückführung bei einer Drehzahl unterhalb einer erhöhten Leerlaufdrehzahl ausgeschaltet. Diese Schaltfunktion ist dann vorgesehen, wenn mit geringer werdenden Drehzahlen, beispielsweise unterhalb einer Grenzdrehzahl von 1500 U/min die Gefahr besteht, dass bei einer Abgasrückführung durch die Auslegung des Einspritzsystems Rauchprobleme auftreten können. Zu diesem Zweck ist ein induktiver Drehzahlschalter vorgesehen, der ebenfalls an dem Pumpengehäuse angebaut wird und unterhalb insbesondere einer Drehzahl von 1450 U/min das gewünschte Schaltsignal abgibt.

### Bezugszeichen

- 1: Ansaugleitung
- 2: Abgasleitung
- 3: Abgasrückführleitung
- 4: Einspritzpumpe
- 5: Regelstange
- 6: AGR-Ventil
- 7: Abgreifvorrichtung
- 8: Brennkraftmaschine
- 9: Kurbelgehäuse
- 10: Ölwanne
- 11: Zylinderkopf
- 12: Kühlrippe
- 13: Zweifach-Riemenrad
- 14a, 14b: Keilriemen
- 15: Generator
- 16: Spannrolle
- 17: Kühlluftgebläse
- 18: Kühlluftleitgehäuse
- 19: schwungradseitiges Ende
- 20a, 20b: Einspritzleitung
- 21: Spannpratze
- 22: Ventildeckel
- 23a, 23b: Kanal
- 24a, 24b: Verbindungseinrichtung
- 25: Sammelleitung
- 26: Bogen
- 27: Zufuhrleitung
- 28: Umlenkbogen
- 29: Verteilleitung

## Patentansprüche

1. Brennkraftmaschine mit einer Ansaugleitung (1) zur Zuführung der Verbrennungsluft zu den einzelnen Brennräumen, mit einer Abgasleitung (2) zur Abführung der Abgase aus den Brennräumen, mit einer die Ansaugleitung (1) und die Abgasleitung (2) verbindenden Abgasrückführleitung (3) und mit einer mechanischen Einspritzpumpe (4), wobei der Abgasrückführleitung (3) ein elektrisch gesteuertes AGR-Ventil (Abgasrückführ-Ventil) (6) zur Steuerung des wirksamen Querschnittes der Abgasrückführleitung (3) angeordnet ist, ***dadurch gekennzeichnet,* dass** eine elektrische Abgreifvorrichtung (7) die Stellung einer die Einspritzpumpe (4) steuernden Regelstange (5) ermittelt und danach das AGR-Ventil (6) steuert und dass die elektrische Abgreifvorrichtung (7) ein berührungsloser Schalter ist, der bei vorbestimmten Positionen der Regelstange (5) ein Signal an das AGR-Ventil (6) zum Öffnen oder Schließen abgibt.

2. Brennkraftmaschine mit einer Ansaugleitung (1) zur Zuführung der Verbrennungsluft zu den einzelnen Brennräumen, mit einer Abgasleitung (2) zur Abführung der Abgase aus den Brennräumen, mit einer die Ansaugleitung (1) und die Abgasleitung (2) verbindenden Abgasrückführleitung (3) und mit einer mechanischen Einspritzpumpe (4), wobei der Abgasrückführleitung (3) ein elektrisch gesteuertes AGR-Ventil (Abgasrückführ-Ventil) (6) zur Steuerung des wirksamen Querschnittes der Abgasrückführleitung (3) angeordnet ist, ***dadurch gekennzeichnet,* dass** eine elektrische Abgreifvorrichtung (7) die Stellung einer die Einspritzpumpe (4) steuernden Regelstange (5) ermittelt und danach das AGR-Ventil (6) steuert und dass die elektrische Abgreifvorrichtung (7) ein berührungsloser Weggeber ist, der die Stellung der Regelstange (5) kontinuierlich ermittelt und danach das AGR-Ventil (6) kontinuierlich steuert.

3. Brennkraftmaschine nach einem der vorhergehenden Ansprüche,
***dadurch gekennzeichnet,* dass** die Brennkraftmaschine (8) eine selbstzündende Brennkraftmaschine ist.

4. Brennkraftmaschine nach einem der vorhergehenden Ansprüche,
***dadurch gekennzeichnet,* dass** die Einspritzpumpe (4) eine Reiheneinspritzpumpe ist.

5. Brennkraftmaschine nach einem der vorherigen Ansprüche,
***dadurch gekennzeichnet,* dass** das Abgasrückführsystem auf der zu der Ansaugleitung (1) und der Abgasleitung (2) gegenüberliegenden Zylinderkopfseite angeordnet ist.

6. Brennkraftmaschine nach Anspruch 5,
***dadurch gekennzeichnet,* dass** in den Zylinderkopf (11) jeweils mit dem Frischgaskanal und dem Abgaskanal verbundene auf der Zylinderkopfseite mündende Kanäle (23a, 23b) eingelassen sind.

7. Brennkraftmaschine nach Anspruch 5 oder Anspruch 6,
***dadurch gekennzeichnet,* dass** die Brennkraftmaschine ein Kühlluftgebläse (17) aufweist und dass das Abgasrückführsystem direkt in dem von dem Kühlluftgebläse (17) geförderten Kühlluftstrom innerhalb eines Kühlluftleitgehäuses (18) angeordnet ist.

8. Brennkraftmaschine nach Anspruch 8,
***dadurch gekennzeichnet,* dass** das AGR-Ventil (6) benachbart zu dem Kühlluftgebläse (17) angeordnet ist.

9. Brennkraftmaschine nach einem der Ansprüche 5 bis 8,
***dadurch gekennzeichnet,* dass** das Abgasrückführsystem eine Innen-/ Außenverrippung aufweist.

## Claims

1. Internal combustion engine having an intake line (1) for supplying the combustion air to the individual combustion chambers, having an exhaust-gas line (2) for discharging the exhaust gases out of the combustion chambers, having an exhaust-gas recirculation line (3) which connects the intake line (1) and the exhaust-gas line (2), and having a mechanical injection pump (4), wherein in the exhaust-gas recirculation line (3) there is arranged an electrically controlled EGR (exhaust-gas recirculation) valve (6) for controlling the effective cross section of the exhaust-gas recirculation line (3), **characterized in that** an electrical pick-off device (7) determines the position of a regulating rod (5) which controls the injection pump (4), and said electrical pick-off device controls the EGR valve (6) on the basis of said position, and **in that** the electrical pick-off device (7) is a contactless switch which, at predetermined positions of the regulating rod (5), transmits a signal to the EGR valve (6) to open or close the latter.

2. Internal combustion engine having an intake line (1) for supplying the combustion air to the individual combustion chambers, having an exhaust-gas line (2) for discharging the exhaust gases out of the combustion chambers, having an exhaust-gas recirculation line (3) which connects the intake line (1) and the exhaust-gas line (2), and having a mechanical injection pump (4), wherein in the exhaust-gas recirculation line (3) there is arranged an electrically controlled EGR (exhaust-gas recirculation) valve (6) for controlling the effective cross section of the exhaust-gas recirculation line (3), **characterized in that** an electrical pick-off device (7) determines the position of a regulating rod (5) which controls the injection pump (4), and said electrical pick-off device controls the EGR valve (6) on the basis of said position, and **in that** the electrical pick-off device (7) is a contactless travel sensor which continuously determines the position of the regulating rod (5) and continuously controls the EGR valve (6) on the basis of said position.

3. Internal combustion engine according to one of the preceding claims,
**characterized in that** the internal combustion engine (8) is an auto-ignition internal combustion engine.

4. Internal combustion engine according to one of the preceding claims,
**characterized in that** the injection pump (4) is an in-line injection pump.

5. Internal combustion engine according to one of the preceding claims,
**characterized in that** the exhaust-gas recirculation system is arranged on that side of the cylinder head which is opposite the intake line (1) and the exhaust-gas line (2).

6. Internal combustion engine according to Claim 5,
**characterized in that** ducts (23a, 23b) which are connected in each case to the fresh-gas duct and to the exhaust-gas duct and which open out at the cylinder head side are formed into the cylinder head (11).

7. Internal combustion engine according to Claim 5 or Claim 6,
**characterized in that** the internal combustion engine has a cooling-air fan (17) and **in that** the exhaust-gas recirculation system is arranged directly in the cooling-air flow, which is fed by the cooling-air fan (17), within a cooling-air guide housing (18).

8. Internal combustion engine according to Claim 7,
**characterized in that** the EGR valve (6) is arranged adjacent to the cooling air fan (17).

9. Internal combustion engine according to one of Claims 5 to 8,
**characterized in that** the exhaust-gas recirculation system has an internal/external arrangement of fins.

## Revendications

1. Moteur à combustion interne comprenant une conduite d'admission (1) pour l'alimentation en air comburant des chambres de combustion individuelles, une conduite d'échappement (2) pour l'évacuation des gaz d'échappement hors des chambres de combustion, une conduite de recirculation des gaz d'échappement (3) reliant la conduite d'admission (1) et la conduite d'échappement (2), et une pompe d'injection mécanique (4), une soupape RGE (soupape de recirculation des gaz d'échappement) (6) commandée électriquement étant disposée dans la conduite de recirculation des gaz d'échappement (3) pour commander la section transversale efficace de la conduite de recirculation des gaz d'échappement (3),
***caractérisé en ce* qu'**un dispositif électrique de détection (7) détermine la position d'une tige de régulation (5) commandant la pompe d'injection (4) et commande ensuite la soupape RGE (6) et **en ce que** le dispositif électrique de détection (7) est un commutateur sans contact qui, à des positions prédéterminées de la tige de régulation (5), envoie un signal d'ouverture ou de fermeture à la soupape RGE (6).

2. Moteur à combustion interne comprenant une conduite d'admission (1) pour l'alimentation en air comburant des chambres de combustion individuelles, une conduite d'échappement (2) pour l'évacuation des gaz d'échappement hors des chambres de combustion, une conduite de recirculation des gaz d'échappement (3) reliant la conduite d'admission (1) et la conduite d'échappement (2), et une pompe d'injection mécanique (4), une soupape RGE (soupape de recirculation des gaz d'échappement) (6) commandée électriquement étant disposée dans la conduite de recirculation des gaz d'échappement (3) pour commander la section transversale efficace de la conduite de recirculation des, gaz d'échappement (3),
***caractérisé en ce* qu'**un dispositif électrique de détection (7) détermine la position d'une tige de régulation (5) commandant la pompe d'injection (4) et commande ensuite la soupape RGE (6) et **en ce que** le dispositif électrique de détection (7) est un capteur de position sans contact qui détecte en continu la position de la tige de régulation (5) et qui commande ensuite en continu la soupape RGE (6).

3. Moteur à combustion interne selon l'une quelconque des revendications précédentes,
***caractérisé en ce que*** le moteur à combustion interne (8) est un moteur à combustion interne à auto-allumage.

4. Moteur à combustion interne selon l'une quelconque des revendications précédentes,
***caractérisé en ce que*** la pompe d'injection (4) est une pompe d'injection série.

5. Moteur à combustion interne selon l'une quelconque des revendications précédentes,
***caractérisé en ce que*** le système de recirculation des gaz d'échappement est disposé du côté de la culasse opposé à la conduite d'admission (1) et à la conduite d'échappement (2).

6. Moteur à combustion interne selon la revendication 5,
***caractérisé en ce que*** dans la culasse (11) sont pratiqués des canaux (23a, 23b) connectés à chaque fois au canal des gaz frais et au canal de gaz d'échappement et débouchant du côté de la culasse.

7. Moteur à combustion interne selon la revendication 5 ou la revendication 6,
***caractérisé en ce que*** le moteur à combustion interne présente un ventilateur d'air de refroidissement (17) et **en ce que** le système de recirculation des gaz d'échappement est disposé directement dans le courant d'air de refroidissement refoulé par le ventilateur d'air de refroidissement (17) à l'intérieur d'un boîtier d'air de refroidissement (18).

8. Moteur à combustion interne selon la revendication 7,
***caractérisé en ce que*** la soupape RGE (6) est disposée à côté du ventilateur d'air de refroidissement (17).

9. Moteur à combustion interne selon l'une quelconque des revendications 5 à 8,
***caractérisé en ce que*** le système de recirculation des gaz d'échappement présente un nervurage intérieur/extérieur.
